# EUROPÄISCHE PATENTSCHRIFT

(11) **EP 2 989 861 B1**
(45) Veröffentlichungstag und Bekanntmachung des Hinweises auf die Patenterteilung: **26.04.2023**
(21) Anmeldenummer: 14732062.6
(22) Anmeldetag: 25.04.2014
(51) Int. Cl.: H05B 45/10

(54) **BETRIEBSSCHALTUNG UND VERFAHREN ZUM BETREIBEN WENIGSTENS EINER LEUCHTDIODE ABHÄNGIG VON EINEM DIMMLEVEL**
OPERATING CIRCUIT AND METHOD FOR OPERATING OF AT LEAST ONE LED DEPENDENT ON A DIMMLEVEL
CIRCUIT ET PROCÉDÉ PERMETTANT DE FAIRE FONCTIONNER AU MOINS UNE DIODE ÉLECTROLUMINESCENTE EN FONCTION D'UN NIVEAU D'INTENSITÉ LUMINEUSE

(30) Priorität: 26.04.2013 DE 102013007280; 13.08.2013 DE 102013215963
(43) Veröffentlichungstag der Anmeldung: 02.03.2016
(73) Patentinhaber: Tridonic GmbH & Co. KG, 6851 Dornbirn (AT)
(72) Erfinder: NETZER, Harald, AT-6710 Nenzing (AT); MARTE, Patrick, AT-6840 Götzis (AT)
(74) Vertreter: Banzer, Hans-Jörg
(86) Internationale Anmeldenummer: PCT/AT2014/000089
(87) Internationale Veröffentlichungsnummer: WO 2014/172731

(56) Entgegenhaltungen:
- WO-A1-2010/045666
- WO-A1-2012/045475
- WO-A2-2010/025450
- DE-A1-102006 034 371
- US-A1- 2006 261 752
- US-A1- 2010 259 177
- US-A1- 2010 277 088
- US-A1- 2012 217 889

## Beschreibung

Die Erfindung betrifft eine Betriebsschaltung für ein Leuchtmittel. Die Erfindung betrifft insbesondere Betriebsschaltungen zum Versorgen einer Leuchtdiode (LED) oder mehrerer LEDs in Abhängigkeit von einem Dimmlevel.

Mit zunehmender Verbreitung von Leuchtmitteln wie LEDs und LED-Modulen gewinnen Betriebsschaltungen für derartige Leuchtmittel weiter an Bedeutung. Die Betriebsschaltung dient hauptsächlich dazu, eine gewünschte Energieversorgung für das Leuchtmittel bereitzustellen. Zusätzliche Funktionen können in der Betriebsschaltung vorgesehen sein, um beispielsweise eine Dimmbarkeit des Leuchtmittels zu ermöglichen. Die Lichtabstrahlung von LEDs hängt von einem Stromfluss durch die LEDs ab. Zur Helligkeitssteuerung oder Helligkeitsregelung werden LEDs daher typischerweise in einem Modus betrieben, in dem der Stromfluss durch die LED durch eine Betriebsschaltung gesteuert oder geregelt wird.

Zur Ansteuerung einer Anordnung von einer oder mehrerer LEDs können Schaltregler, insbesondere Tiefsetzsteller verwendet werden, die in der Technik auch als Abwärtswandler, Buck-Konverter oder "Step-Down"-Konverter bezeichnet werden. In einer derartigen Betriebsschaltung steuert eine Steuereinrichtung einen hochfrequent getakteten steuerbaren Schalter an. Bei dem steuerbaren Schalter kann es sich beispielsweise um einen Leistungstransistor handeln. Im eingeschalteten Zustand des Schalters fließt Strom über die LED-Anordnung und eine Spule, die dadurch mit Energie aufgeladen wird. Die zwischengespeicherte Energie der Spule entlädt sich im ausgeschalteten Zustand des Schalters über die LEDs.

Um Verschiebungen im Lichtspektrum bei unterschiedlichen Dimmleveln zu verringern, kann bei LEDs für eine Helligkeitssteuerung oder Helligkeitsregelungen ein gepulster Betrieb eingesetzt werden. Dabei werden den LEDs durch die Betriebsschaltung Pulspakete von Strom zugeführt. Die LEDs können zu kleineren Dimmleveln gedimmt werden, indem der zeitliche Abstand zwischen den Pulspaketen vergrößert wird, also die Frequenz, mit der Pulspakete erzeugt werden, verringert wird. Entsprechende auf einer Pulsweitenmodulation beruhende Dimmtechniken sind beispielsweise aus der DE 10 2006 034 371 A1, der WO 2010/025450 A1 oder der US 2010/0277088 A1 bekannt. Aus der US 2012/0217889 A1 ist weiterhin bekannt, eine Schaltfrequenz eines Leistungskonverters an eine zum Dimmen genutzte Pulsweitenmodulation anzupassen.

Der von der Betriebsschaltung an die LEDs bereitgestellte Ausgangsstrom kann während der Pulsdauer einen im zeitlichen Mittel konstanten Strom aufweisen, dem Stromrippel überlagert sind. Derartige Stromrippel werden durch das getaktete Schalten des steuerbaren Schaltmittels hervorgerufen.

Auch bei vorgegebenem Dimmlevel können Situationen vorkommen, bei denen die Anzahl von Schaltzyklen des steuerbaren Schaltmittels von einem Pulspaket zum nächsten Pulspaket variiert. Ein weiterer Schaltzyklus des steuerbaren Schaltmittels kann beispielsweise automatisch dadurch ausgelöst werden, dass der Ausgangsstrom der Betriebsschaltung einen Stromschwellenwert erreicht. Abhängig davon, ob dieser Stromschwellenwert kurz vor oder kurz nach dem Ende der festgelegten Pulsdauer des Pulspakets liegt, kann die Anzahl von Schaltzyklen pro Pulspaket variieren. Entsprechend kann die für ein Pulspaket an die LEDs bereitgestellte Energie variieren. Dies kann zu einem unerwünschten Flackern des Lichts führen. Ein derartiges Flackern kann vom menschlichen Auge wahrgenommen werden und wird häufig als störend empfunden.

Der Erfindung liegt die Aufgabe zugrunde, Vorrichtungen und Verfahren anzugeben, die die beschriebenen Probleme verringern. Aufgabe ist es insbesondere, Vorrichtungen und Verfahren anzugeben, die Lichtflackern verringern, ohne Schaltverluste bei hohen Dimmleveln signifikant zu erhöhen.

Erfindungsgemäß werden eine Betriebsschaltung für wenigstens eine Leuchtdiode (LED) und ein Verfahren mit den in den unabhängigen Ansprüchen angegebenen Merkmalen angegeben. Die abhängigen Ansprüche definieren Ausführungsformen der Erfindung.

Nach Ausführungsbeispielen der Erfindung wird wenigstens in einem Dimmlevelbereich, z.B. für Dimmlevel, die kleiner als ein Schwellenwert sind, eine Schaltfrequenz eines steuerbaren Schaltmittels einer Betriebsschaltung dynamisch an den jeweiligen Dimmlevel angepasst. Die Stromrippel werden entsprechend dynamisch an den jeweiligen Dimmlevel angepasst.

Die erfindungsgemäße Betriebsschaltung umfasst Ausgangsanschlüsse zum Verbinden mit der wenigstens einen Leuchtdiode, eine Spule, eine Diode, ein steuerbares Schaltmittel und eine Steuereinrichtung. Die Steuereinrichtung ist eingerichtet, um zum Bereitstellen eines Pulspakets an die wenigstens eine LED während einer Pulsdauer das steuerbare Schaltmittel wiederholt einzuschalten, um Energie in der Spule zwischenzuspeichern, und auszuschalten, um in der Spule zwischengespeicherte Energie über eine Diode und über die wenigstens eine LED zu entladen. Die Steuereinrichtung ist so eingerichtet, dass eine Schaltfrequenz, mit der während der Pulsdauer das steuerbare Schaltmittel eingeschaltet wird oder mit der während der Pulsdauer das steuerbare Schaltmittel ausgeschaltet wird, wenigstens in einem Dimmlevelbereich von einem Dimmlevel abhängt.

Die Steuereinrichtung ist insbesondere eingerichtet, um das steuerbare Schaltmittel so zu schalten, dass die Schaltfrequenz in dem wenigstens einen Dimmlevelbereich eine monoton abnehmende Funktion des Dimmlevels ist.

Die Steuereinrichtung kann eingerichtet sein, um das steuerbare Schaltmittel so zu schalten, dass die Schaltfrequenz für Dimmlevel, die kleiner als ein Schwellenwert sind, eine streng monoton abnehmende Funktion des Dimmlevels ist.

Die Steuereinrichtung kann eingerichtet sein, um das steuerbare Schaltmittel so zu schalten, dass die Schaltfrequenz für Dimmlevel, die kleiner als der Schwellenwert sind, eine linear abnehmende Funktion des Dimmlevels ist. Für Dimmlevel, die größer als der Schwellenwert sind, kann die Schaltfrequenz eine konstante Funktion des Dimmlevels sein.

Die Steuereinrichtung kann eingerichtet sein, um das steuerbare Schaltmittel so zu schalten, dass eine Amplitude von in dem Pulspaket auftretenden Stromrippeln in dem Dimmlevelbereich von dem Dimmlevel abhängt.

Die Steuereinrichtung kann eingerichtet sein, um das steuerbare Schaltmittel so zu schalten, dass die Amplitude der Stromrippel in dem wenigstens einen Dimmlevelbereich eine streng monoton zunehmende Funktion des Dimmlevels ist.

Die Steuereinrichtung kann eingerichtet sein, um das steuerbare Schaltmittel so zu schalten, dass die Amplitude der Stromrippel in dem wenigstens einen Dimmlevelbereich eine linear zunehmende Funktion des Dimmlevels ist.

Die Steuereinrichtung kann eingerichtet sein, um das steuerbare Schaltmittel so zu schalten, dass eine maximale Stromstärke und eine minimale Stromstärke von Stromrippeln in dem wenigstens einen Dimmlevelbereich von dem Dimmlevel abhängen.

Die Steuereinrichtung kann eingerichtet sein, um das steuerbare Schaltmittel so zu schalten, dass eine maximale Stromstärke der Stromrippel eine linear zunehmende Funktion des Dimmlevels ist.

Die Steuereinrichtung kann eingerichtet sein, um das steuerbare Schaltmittel so zu schalten, dass eine minimale Stromstärke der Stromrippel eine linear abnehmende Funktion des Dimmlevels ist.

Die Steuereinrichtung kann eingerichtet sein, um das steuerbare Schaltmittel so zu schalten, dass ein Mittelwert einer Stromstärke der Stromrippel unabhängig von dem Dimmlevel ist.

Die Steuereinrichtung kann eine vom Dimmlevel abhängige Schaltfrequenz und/oder Amplitude der Stromrippel auf verschiedene Weise erreichen. Die Steuereinrichtung kann den Ausgangsstrom, der an die wenigstens eine LED bereitgestellt wird, mit einem Schaltschwellenwert vergleichen und das steuerbare Schaltmittel abhängig von dem Schaltschwellenwertvergleich einschalten oder ausschalten. Die Steuereinrichtung kann eine Zeitdauer bis zum nachfolgenden Ausschalten bzw. Einschalten abhängig von dem Dimmlevel bestimmen. Der Schaltschwellenwert und/oder die Zeitdauer können beispielsweise kennfeldbasiert bestimmt werden, von der Steuereinrichtung berechnet werden oder extern vorgegeben sein.

Die Steuereinrichtung kann eingerichtet sein, um während der Pulsdauer das steuerbare Schaltmittel einzuschalten, wenn eine Stromstärke durch die wenigstens eine Leuchtdiode einen ersten Schaltschwellenwert erreicht, und nach einer ersten Zeitdauer wieder auszuschalten, wobei der erste Schaltschwellenwert und die erste Zeitdauer von dem Dimmlevel abhängen.

Die Steuereinrichtung kann eingerichtet sein, um während der Pulsdauer das steuerbare Schaltmittel auszuschalten, wenn eine Stromstärke durch die wenigstens eine Leuchtdiode einen zweiten Schaltschwellenwert erreicht, und nach einer zweiten Zeitdauer wieder einzuschalten, wobei der zweite Schaltschwellenwert und die zweite Zeitdauer von dem Dimmlevel abhängen.

Die Steuereinrichtung kann derart eingerichtet sein, dass in unterschiedlichen Pulspaketen die Steuereinrichtung das steuerbare Schaltmittel mit wenigstens zwei unterschiedlichen Schaltzyklenzahlen schaltet. Derartige unterschiedliche Schaltzyklenzahlen können für unterschiedliche Pulspakete bei festem Dimmlevel auch bewusst hervorgerufen werden, um beispielsweise Korrekturen an dem über mehrere Pulspakete gemittelten Ausgangsstrom zu realisieren. Damit kann eine feine Einstellung des über mehrere Pulspakete gemittelten Ausgangsstroms auf einen Zielwert erreicht werden.

Die Steuereinrichtung kann derart eingerichtet sein, dass sich eine Schaltzyklenzahl eines Pulspakets, das für einen Dimmlevel erzeugt wird, und eine weitere Schaltzyklenzahl eines weiteren Pulspakets, das für denselben Dimmlevel erzeugt wird, um 1 unterscheiden.

Die Steuereinrichtung kann eine integrierte Halbleiterschaltung sein. Die Steuereinrichtung kann als ein Prozessor, ein Mikroprozessor, ein Controller, ein Mikrocontroller oder eine anwendungsspezifische Spezialschaltung (ASIC, "Application Specific Integrated Circuit") ausgestaltet sein.

Die Steuereinrichtung kann einen Eingang zum Empfangen des Dimmlevels oder einer den Dimmlevel beeinflussenden Größe umfassen.

Die Betriebsschaltung kann einen Eingang zum Empfangen einer Gleichspannung oder einer gleichgerichteten Wechselspannung umfassen.

Die Betriebsschaltung kann einen Kondensator umfassen, der parallel zu der wenigstens einen LED geschaltet ist.

Die wenigstens eine LED kann eine oder mehrere anorganische und/oder organische LED(s) umfassen.

Nach einem weiteren Ausführungsbeispiel wird ein System bereitgestellt, das die Betriebsschaltung und die wenigstens eine LED umfasst, die mit der Betriebsschaltung verbunden ist.

Das erfindungsgemäße Verfahren dient zum Betreiben wenigstens einer LED mittels einer Betriebsschaltung. Die Betriebsschaltung umfasst Ausgangsanschlüsse zum Verbinden mit der wenigstens einen Leuchtdiode, eine Spule, eine Diode und ein steuerbares Schaltmittel. Die wenigstens eine LED wird abhängig von einem Dimmlevel mit Energie versorgt. Zum Erzeugen eines der wenigstens einen LED zugeführten Pulspakets wird das steuerbare Schaltmittel jeweils wiederholt eingeschaltet, um Energie in der Spule zwischenzuspeichern, und ausgeschaltet, um in der Spule zwischengespeicherte Energie über eine Diode und über die wenigstens eine LED zu entladen. Eine Schaltfrequenz, mit der während der Pulsdauer das steuerbare Schaltmittel eingeschaltet wird oder mit der während der Pulsdauer das steuerbare Schaltmittel ausgeschaltet wird, hängt wenigstens in einem Dimmlevelbereich von dem Dimmlevel ab.

Für Dimmlevel in dem wenigstens einen Dimmlevelbereich ist die Schaltfrequenz eine monoton abnehmende Funktion des Dimmlevels.

Wenigstens für Dimmlevel, die kleiner als ein Schwellenwert sind, kann die Schaltfrequenz eine streng monoton abnehmende Funktion des Dimmlevels sein.

Die Schaltfrequenz kann für Dimmlevel, die kleiner als der Schwellenwert sind, eine linear abnehmende Funktion des Dimmlevels sein. Für Dimmlevel, die größer als der Schwellenwert sind, kann die Schaltfrequenz eine konstante Funktion des Dimmlevels sein.

Eine Amplitude von in dem Pulspaket auftretenden Stromrippeln kann in dem wenigstens einen Dimmlevelbereich von dem Dimmlevel abhängen.

Die Amplitude der Stromrippel kann in dem wenigstens einen Dimmlevelbereich eine streng monoton zunehmende Funktion des Dimmlevels ist.

Die Amplitude der Stromrippel kann in dem wenigstens einen Dimmlevelbereich eine linear zunehmende Funktion des Dimmlevels sein.

Eine maximale Stromstärke und eine minimale Stromstärke von Stromrippeln können in dem Dimmlevelbereich von dem Dimmlevel abhängen.

Die maximale Stromstärke der Stromrippel kann eine linear zunehmende Funktion des Dimmlevels sein.

Die minimale Stromstärke der Stromrippel kann eine linear abnehmende Funktion des Dimmlevels sein.

Das steuerbare Schaltmittel kann so geschaltet werden, dass ein Mittelwert einer Stromstärke der Stromrippel unabhängig von dem Dimmlevel ist.

Der Ausgangsstrom, der an die wenigstens eine LED bereitgestellt wird, kann mit einem Schaltschwellenwert verglichen werden, und das steuerbare Schaltmittel kann abhängig von dem Schaltschwellenwertvergleich eingeschaltet oder ausgeschaltet werden. Die Zeitdauer bis zum nachfolgenden Ausschalten bzw. Einschalten kann abhängig von dem Dimmlevel bestimmt werden. Der Schaltschwellenwert und/oder die Zeitdauer können beispielsweise kennfeldbasiert bestimmt, von einer Steuereinrichtung berechnet oder extern vorgegeben sein.

Das steuerbare Schaltmittel kann während der Pulsdauer jeweils eingeschaltet werden, wenn eine Stromstärke durch die wenigstens eine Leuchtdiode einen ersten Schaltschwellenwert erreicht, und nach einer ersten Zeitdauer wieder ausgeschaltet werden, wobei der erste Schaltschwellenwert und die erste Zeitdauer von dem Dimmlevel abhängen.

Das steuerbare Schaltmittel kann während der Pulsdauer ausgeschaltet werden, wenn eine Stromstärke durch die wenigstens eine Leuchtdiode einen zweiten Schaltschwellenwert erreicht, und nach einer zweiten Zeitdauer wieder eingeschaltet werden, wobei der zweite Schaltschwellenwert und die zweite Zeitdauer von dem Dimmlevel abhängen.

Unterschiedliche Pulspakete können wenigstens zwei unterschiedliche Schaltzyklenzahlen aufweisen. Derartige unterschiedliche Schaltzyklenzahlen können für unterschiedliche Pulspakete bei festem Dimmlevel gezielt eingestellt werden, um beispielsweise den über mehrere Pulspakete gemittelten Ausgangsstrom auf einen bestimmten Soll-Wert einzustellen. Damit kann eine feine Anpassung des über mehrere Pulspakete gemittelten Ausgangsstroms erreicht werden.

Eine Schaltzyklenzahl eines Pulspakets, das für einen Dimmlevel erzeugt wird, und eine weitere Schaltzyklenzahl eines weiteren Pulspakets, das für denselben Dimmlevel erzeugt wird, können sich um 1 unterscheiden.

Der Betriebsschaltung kann eine Gleichspannung oder eine gleichgerichtete Wechselspannung als Versorgungsspannung zugeführt werden.

Das Verfahren kann mit der Betriebsschaltung nach einem Ausführungsbeispiel automatisch ausgeführt werden.

Verfahren nach den verschiedenen Ausführungsformen und die damit jeweils erzielten Wirkungen entsprechen den Ausgestaltungen der Betriebsschaltung nach Ausführungsbeispielen.

Bei Vorrichtungen und Verfahren nach Ausführungsbeispielen kann eine Schaltfrequenz, mit der das steuerbare Schaltmittel eingeschaltet und/oder ausgeschaltet wird, abhängig von dem Dimmlevel gewählt werden. Insbesondere werden für einen Dimmlevelbereich bei kleinen Dimmleveln Schaltfrequenzen gewählt werden, die größer sind als die für größere Dimmlevel verwendete Schaltfrequenz. Durch die höhere Schaltfrequenz und/oder kleinere Rippelamplitude bei kleinen Dimmleveln können relative Schwankungen zwischen der mittleren Stromstärke von Pulspaketen reduziert werden, auch wenn die Pulspakete einer unterschiedlichen Anzahl von Schaltzyklen entsprechen. Bei größeren Dimmleveln kann eine kleinere Schaltfrequenz gewählt werden, da aufgrund der insgesamt größeren Anzahl von Schaltzyklen pro Pulspaket relative Schwankungen um beispielsweise einen Schaltzyklus nicht zu einem deutlich wahrnehmbaren Flackern führen würden. Die kleinere Schaltfrequenz bei größeren Dimmleveln hält Schaltverluste niedrig, die durch die endliche Schaltzeit des steuerbaren Schaltmittels verursacht werden.

Die Erfindung wird nachfolgend unter Bezugnahme auf die Figuren anhand bevorzugter Ausführungsformen erläutert. In den Figuren bezeichnen identische Bezugszeichen identische Elemente.
Figur 1 zeigt eine Betriebsschaltung für Leuchtdioden.
Figur 2 zeigt Pulspakete eines Ausgangsstroms der Betriebsschaltung.
Figur 3 zeigt eine vergrößerte Darstellung eines Abschnitts eines Pulspakets bei einem ersten Dimmlevel.
Figur 4 zeigt eine vergrößerte Darstellung eines Abschnitts eines Pulspakets bei einem zweiten Dimmlevel, der kleiner als der erste Dimmlevel ist, zur Veranschaulichung der Wirkungsweise von Vorrichtungen und Verfahren nach Ausführungsbeispielen.
Figur 5 zeigt ein Steuersignal zum Ansteuern eines steuerbaren Schalters.
Figur 6 zeigt eine Abhängigkeit einer Schaltfrequenz vom Dimmlevel bei Vorrichtungen und Verfahren nach einem Ausführungsbeispiel.
Figur 7 zeigt eine Veränderung eines Tastverhältnisses, mit der Pulspakete erzeugt werden, abhängig vom Dimmlevel.
Figur 8 zeigt eine Abhängigkeit von Maxima und Minima von Stromrippeln vom Dimmlevel bei Vorrichtungen und Verfahren nach einem Ausführungsbeispiel.
Figur 9 zeigt eine Abhängigkeit einer Amplitude von Stromrippeln vom Dimmlevel bei Vorrichtungen und Verfahren nach einem Ausführungsbeispiel.
Figur 10 ist ein Flussdiagramm eines Verfahrens nach einem Ausführungsbeispiel.
Figur 11 zeigt eine Betriebsschaltung für Leuchtdioden nach einem Ausführungsbeispiel.
Figur 12 zeigt eine Betriebsschaltung für Leuchtdioden nach einem Ausführungsbeispiel.
Figur 13 und Figur 14 zeigen Abschnitte von Pulspaketen zur Erläuterung der Wirkungsweise von Ausführungsbeispielen.

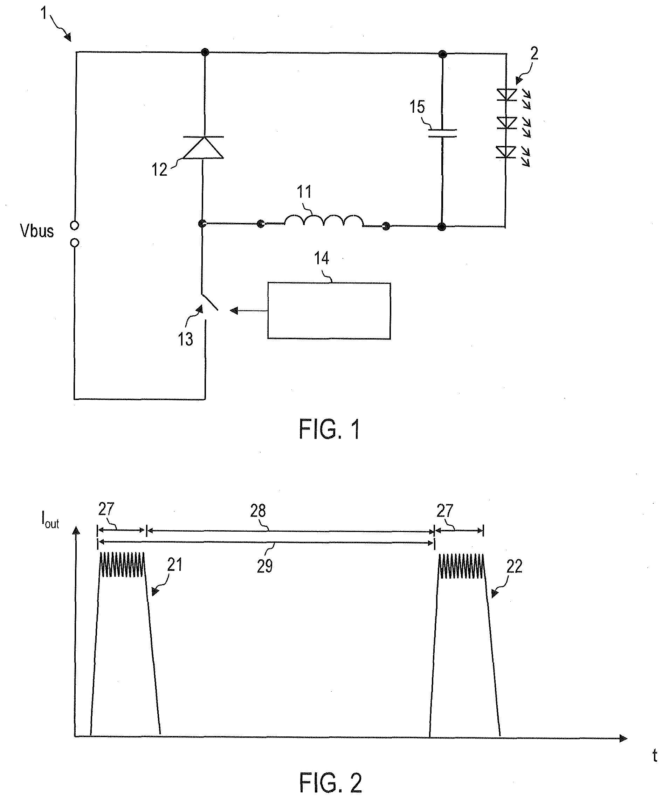

Figur 1 zeigt eine Darstellung eines Systems, das eine Betriebsschaltung 1 für ein Leuchtmittel 2 umfasst. Das Leuchtmittel 2 kann eine Leuchtdiode (LED) oder mehrere LEDs umfassen. Die LEDs können anorganische oder organische LEDs sein. Die mehreren LEDs können in Serie oder parallel geschaltet sein. Die mehreren LEDs können auch in komplexeren Anordnungen verschaltet sein, beispielsweise in mehreren zueinander parallel geschalteten Reihenschaltungen. Während beispielhaft drei LEDs dargestellt sind, kann das Leuchtmittel auch nur eine LED, zwei LEDs oder mehr als drei LEDs aufweisen.

Die Betriebsschaltung 1 dient zum Betrieb der wenigstens einen LED 2. Der Betriebsschaltung 1 wird eine Versorgungsspannung Vbus zugeführt, die eine Gleichspannung oder eine gleichgerichtete Wechselspannung sein kann. Der Ausgang der Betriebsschaltung, der mit der wenigstens einen LED verbunden ist, ist mit einer Spule 11 und einem steuerbaren Schaltmittel 13 verbunden. Wenn die wenigstens eine LED 2 mit der Betriebsschaltung 1 verbunden ist, sind das steuerbare Schaltmittel 13, die Spule 11 und die wenigstens eine LED 2 in Reihe geschaltet. Eine Diode 12 ist parallel zu der wenigstens einen LED 2 und der Spule 11 geschaltet. Ein Kondensator 15 kann zwischen die Ausgangsanschlüsse geschaltet sein, so dass der Kondensator 15 parallel zu der wenigstens einen LED 2 geschaltet ist. Der Kondensator 15 ist ein optionales Element der gezeigten Schaltung und ist für die grundsätzliche Funktion nicht erforderlich, so dass der Kondensator 15 bei weiteren Ausführungsbeispielen weggelassen sein kann.

Im eingeschalteten Zustand des steuerbaren Schaltmittels 13 fließt Strom durch die LED(s) 2 und durch die Spule 11, die dadurch magnetisiert wird. Im ausgeschalteten Zustand des steuerbaren Schaltmittels 13 entlädt sich die im Magnetfeld der Spule gespeicherte Energie in Form eines Stroms über die Diode 12 und die LED(s) 2. Parallel dazu kann am Beginn des Einschaltens des steuerbaren Schaltmittels 13 der Kondensator 15 geladen werden. Während der Ausschaltphase des steuerbaren Schaltmittels 13 (Freilaufphase) kann sich der Kondensator 15 entladen und trägt zum Stromfluss durch die LED(s) 2 bei. Bei geeigneter Dimensionierung des Kondensators 15 kann dies zu einer Glättung des Stroms durch die LED(s) 2 führen.

Das steuerbare Schaltmittel 13 kann ein Leistungsschalter sein. Das steuerbare Schaltmittel 13 kann ein Feldeffekttransistor oder ein Bipolartransistor sein. Das steuerbare Schaltmittel 13 kann ein Transistor mit isolierter Gateelektrode sein.

Die Betriebsschaltung 1 weist eine Steuereinrichtung 14 zum getakteten Schalten des steuerbaren Schaltmittels 13 auf. Wie unter Bezugnahme auf Figur 2 bis Figur 14 detailliert beschrieben wird, kann die Betriebsschaltung 1 in einem gepulsten Betrieb jeweils einen Ausgangsstrom in Form von Pulspaketen bereitstellen. Die Erzeugung von Pulspaketen muss nicht notwendig über den gesamten Betriebsbereich der Betriebsschaltung 1 erfolgen. Beispielsweise können bei kleineren Dimmleveln Pulspakete erzeugt werden, um die gemittelte Stromstärke und somit die vom Auge wahrgenommene Helligkeit einzustellen. Dazu kann beispielsweise eine Pulsmodulation wie beispielsweise eine Pulsweitenmodulation (PWM) verwendet werden, bei der eine Pulsdauer von Pulspaketen und/oder ein zeitlicher Abstand der Pulspakete abhängig von einem Dimmlevel eingestellt werden.

Wie in diesem Gebiet der Technik üblich, entspricht ein größerer Dimmlevel einer größeren Helligkeit, und ein kleinerer Dimmlevel entspricht einer kleineren Helligkeit. Die maximale Helligkeit kann einem Dimmlevel von 100 % entsprechen.

Zum Erzeugen des Pulspakets kann die Steuereinrichtung 14 während einer Pulsdauer das steuerbare Schaltmittel 13 wiederholt einschalten und ausschalten. Dieses getaktete Schalten während eines Pulspakets, bei dem mehrere Schaltzyklen innerhalb der Pulsdauer liegen, darf nicht mit dem Erzeugen aufeinanderfolgender Pulspakete verwechselt werden, das mit einer kleineren Frequenz erfolgt. Wie unter Bezugnahme auf Figur 2 bis Figur 14 detailliert beschrieben wird, steuert die Steuereinrichtung 14 wenigstens in einem Dimmlevelbereich, z.B. für niedrige Dimmlevel, die kleiner als ein Schwellenwert sind, das steuerbare Schaltmittel 13 so, dass eine Schaltfrequenz und/oder ein Rippelstrom des Pulspakets von dem Dimmlevel abhängt. Insbesondere nimmt die Schaltfrequenz unterhalb des Dimmlevel-Schwellenwerts für kleiner werdende Dimmlevel zu. Eine Amplitude des Rippelstroms kann unterhalb des Dimmlevel-Schwellenwerts für kleiner werdende Dimmlevel abnehmen.

Die Steuereinrichtung 14 kann als ein Prozessor, ein Mikroprozessor, ein Controller, ein Mikrocontroller oder eine anwendungsspezifische Spezialschaltung (ASIC, "Application Specific Integrated Circuit") ausgestaltet sein. Die Steuereinrichtung 14 kann einen Dimmlevel über eine Schnittstelle empfangen, beispielsweise von einer Steuerung. Alternativ oder zusätzlich kann die Steuereinrichtung 14 eingerichtet sein, um den Dimmlevel abhängig von wenigstens einem Sensorsignal zu bestimmen. Beispielsweise kann für eine Helligkeitsregelung eine Ist-Helligkeit mit einem Sensor erfasst und ein Dimmlevel abhängig von einem Vergleich von Ist-Helligkeit und Soll-Helligkeit festgelegt werden. Alternativ oder zusätzlich kann die Steuereinrichtung 14 eingerichtet sein, um einen Dimmlevel abhängig von einer Betätigung eines Betätigungselements, beispielsweise eines Tasters, Drehknopfes oder Schalters, zu ermitteln.

Figur 2 zeigt Pulspakete 21, 22 des Stroms, die von der Betriebsschaltung 1 zumindest in einem Betriebsmodus als Ausgangsstrom bereitgestellt werden und durch die LED(s) 2 fließen. Zum Erzeugen der Pulspakete 21, 22 steuert die Steuereinrichtung 14 das steuerbare Schaltmittel 13 an. Dabei wird jeweils in einem Zeitfenster, dessen Dauer eine Pulsdauer 27 des entsprechenden Pulspakets 21, 22 bestimmt, das steuerbare Schaltmittel 13 mehrfach ein- und wieder ausgeschaltet.

Die Schaltfrequenz, mit der die sich zyklisch wiederholenden Einschaltvorgänge oder die sich die sich zyklisch wiederholenden Ausschaltvorgänge in den Pulsen 21, 22jeweils aufeinanderfolgen, hängt von dem Dimmlevel ab, falls der Dimmlevel kleiner als ein Schwellenwert ist.

Aufeinanderfolgende Pulspakete 21, 22 sind durch einen zeitlichen Abstand 28 getrennt, in dem das steuerbare Schaltmittel 13 nicht getaktet geschaltet wird. Die steigende Flanke aufeinanderfolgender Pulspakete 21, 22 ist durch eine Periode 29 voneinander getrennt, die die langsamere zyklische Wiederholung der Erzeugung eines Pulspakets 21, 22 definiert. Das Verhältnis von Pulsdauer 27 zu Periodendauer 29 bestimmt den gemittelten Ausgangsstrom und somit die effektiv wahrgenommene Helligkeit.

Die Periodendauer 29 ist länger als die Dauer eines Schaltzyklus für das getaktete Schalten des steuerbaren Schaltmittels 13 während der Erzeugung eines Pulspakets. Die Periodendauer 29 kann viel länger als die Dauer eines Schaltzyklus für das getaktete Schalten des steuerbaren Schaltmittels 13 während der Erzeugung eines Pulspakets sein.

Ein gepulster Betrieb, wie er in Figur 2 dargestellt ist, muss nicht über den gesamten Betriebsbereich der Betriebsschaltung 1 erfolgen. Beispielsweise kann ein gepulster Betrieb, bei dem Pulspakete erzeugt werden, nur für kleinere Dimmlevel erfolgen. Für größere Dimmlevel können andere Dimmmethoden eingesetzt werden.

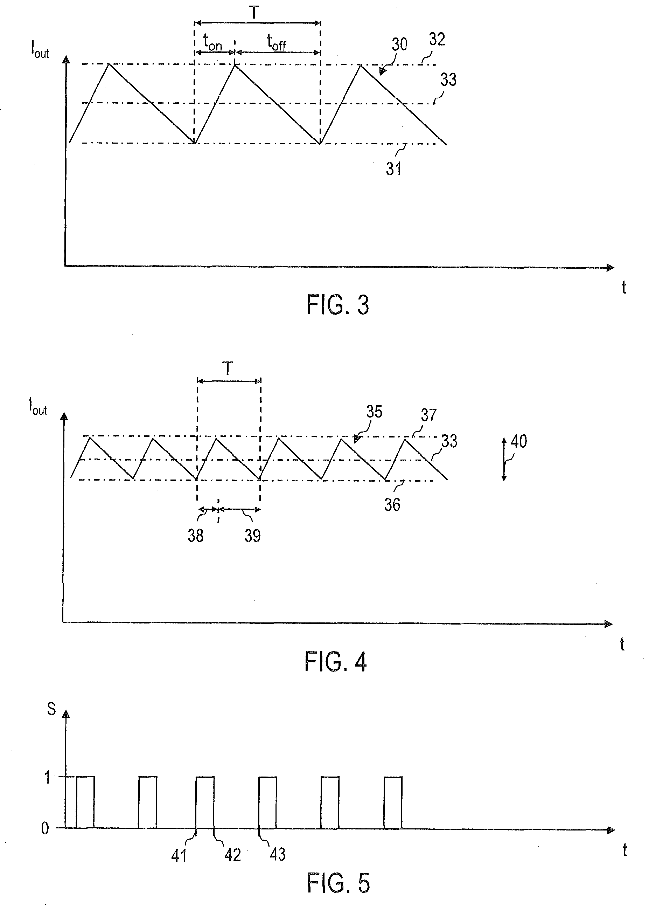

Wie in Figur 2 schematisch dargestellt, ist, weisen die Pulspakete 21, 22 einen Rippelstrom auf. Wie unter Bezugnahme auf Figur 3 bis Figur 14 detailliert beschrieben wird, können die Stromrippel bei Ausführungsbeispielen der Erfindung dynamisch abhängig von einem Dimmlevel geändert werden, wenn der entsprechende Dimmlevel beispielsweise kleiner als ein Schwellenwert ist oder in einem anderen vordefinierten Dimmlevelbereich liegt.

Figur 3 zeigt eine vergrößerte Darstellung eines Abschnitts eines Pulspakets 30, das die Betriebsschaltung 1 bei einem ersten Dimmlevel erzeugt. Figur 4 zeigt eine vergrößerte Darstellung eines Abschnitts eines Pulspakets 35, das die Betriebsschaltung 1 bei einem zweiten Dimmlevel erzeugt, der kleiner als der erste Dimmlevel ist. Dargestellt ist der Ausgangsstrom der Betriebsschaltung 1, der durch die LED(s) fließt.

Wie in Figur 3 dargestellt, kann das steuerbare Schaltmittel 13 jeweils eingeschaltet werden, wenn die Stromstärke einen ersten Schaltschwellenwert 31 der Stromstärke erreicht. Das steuerbare Schaltmittel 13 kann für eine Zeitdauer tₒₙ eingeschaltet bleiben. Wenn die Stromstärke einen zweiten Schaltschwellenwert 32 erreicht, kann das steuerbare Schaltmittel 13 ausgeschaltet werden. Das steuerbare Schaltmittel 13 kann für eine Zeitdauer t_{off} ausgeschaltet bleiben. Nach einer Dauer T eines Schaltzyklus können die Schaltvorgänge erneut wiederholt werden. Dies kann beispielsweise so lange fortgesetzt werden, bis die Pulsdauer 27 des Pulspakets bei Erreichen des ersten Schaltschwellenwerts 31 abgelaufen ist.

Figur 4 zeigt einen Abschnitt eines Pulspakets, wenn der Dimmlevel kleiner als für den Dimmlevel von Figur 3 ist. Die Skalierung der Koordinatenachsen ist in Figur 3 und Figur 4 gleich gewählt. Dargestellt ist der Ausgangsstrom der Betriebsschaltung, der durch die LED(s) fließt.

Bei dem in Figur 4 dargestellten Pulspaket kann das steuerbare Schaltmittel 13 jeweils eingeschaltet werden, wenn die Stromstärke einen weiteren ersten Schaltschwellenwert 36 der Stromstärke erreicht. Dieser weitere erste Schaltschwellenwert 36 ist größer als der erste Schaltschwellenwert 31 bei der Steuerung für den Dimmlevel von Figur 3. Das steuerbare Schaltmittel 13 kann für eine weitere Zeitdauer 38 eingeschaltet bleiben, die kleiner als die Zeitdauer tₒₙ bei der Steuerung für den Dimmlevel von Figur 3 ist. Wenn die Stromstärke einen weiteren zweiten Schaltschwellenwert 37 erreicht, kann das steuerbare Schaltmittel 13 ausgeschaltet werden. Dieser weitere zweite Schaltschwellenwert 37 ist kleiner als der zweite Schaltschwellenwert 32 für den Dimmlevel von Figur 3. Das steuerbare Schaltmittel 13 kann für eine weitere Zeitdauer 39 ausgeschaltet bleiben, die kleiner als die Zeitdauer t_{off} bei der Steuerung für den Dimmlevel von Figur 3 ist.

Ein Mittelwert 33 des Ausgangsstroms, der durch Mittelwertbildung über einen Schaltzyklus gebildet wird, ist bei dem in Figur 3 dargestellten Ausgangsstrom für einen größeren Dimmlevel gleich dem Mittelwert 33 bei dem in Figur 4 dargestellten Ausgangsstrom für einen kleineren Dimmlevel. Eine Amplitude 40 der Stromrippel nimmt ab, wenn der Dimmlevel kleiner wird, und nimmt zu, wenn der Dimmlevel größer wird.

Wie in Figur 3 und Figur 4 dargestellt, kann bei Betriebsschaltungen und Verfahren nach Ausführungsbeispielen die Erzeugung der Pulspakete derart erfolgen, dass eine maximale Stromstärke 32, 37 der Stromrippel kleiner wird, wenn der Dimmlevel abnimmt. Anders ausgedrückt ist für den Dimmlevelbereich, z.B. für Dimmlevel kleiner als ein Schwellenwert, die maximale Stromstärke 32, 37 der Stromrippel eine monoton zunehmende Funktion des Dimmlevels. Die Erzeugung der Pulspakete kann derart erfolgen, dass eine minimale Stromstärke 31, 36 der Stromrippel größer wird, wenn der Dimmlevel abnimmt. Anders ausgedrückt ist für den Dimmlevelbereich, z.B. für Dimmlevel kleiner als der Schwellenwert, die minimale Stromstärke 31, 36 der Stromrippel eine monoton abnehmende Funktion des Dimmlevels.

Die maximale Stromstärke 32, 37 und/oder die minimale Stromstärke 31, 36 können Schaltschwellenwerte definieren, bei denen die Steuereinrichtung 14 das steuerbare Schaltmittel 13 ausschaltet bzw. einschaltet. Wenn der Dimmlevel in einem bestimmten Dimmlevelbereich liegt, können diese Schaltschwellenwerte abhängig vom Dimmlevel so verändert werden, dass die Amplitude 40 der Stromrippel mit kleiner werdendem Dimmlevel kleiner wird. Wenn der Dimmlevel in einem bestimmten Dimmlevelbereich liegt, können diese Schaltschwellenwerte abhängig vom Dimmlevel so verändert werden, dass der Mittelwert 33 als Funktion des Dimmlevels konstant bleibt.

Die Steigung der Stromflanken, die in Figur 3 und Figur 4 schematisch dargestellt sind, hängen von der spezifischen Ausgestaltung der Schaltungskomponenten der Betriebsschaltung 1 ab. Eine Änderung der Stromrippel geht einher mit einer Änderung der Schaltfrequenz. Die Schaltfrequenz, mit der das steuerbare Schaltmittel 13 während eines Pulspakets jeweils eingeschaltet wird oder mit der das steuerbare Schaltmittel 13 während eines Pulspakets jeweils ausgeschaltet wird, entspricht dem Inversen des Dauer T des Schaltzyklus. Wenn der Dimmlevel in einem bestimmten Dimmlevelbereich liegt, kann die Schaltfrequenz mit kleiner werdendem Dimmlevel zunehmen und mit größer werdendem Dimmlevel abnehmen. Die Schaltfrequenz kann für Dimmlevel in dem Dimmlevelbereich eine abnehmende Funktion des Dimmlevels sein.

Figur 5 zeigt ein Steuersignal zum Ansteuern des steuerbaren Schaltmittels 13. Mit dem dargestellten Steuersignal wird das in Figur 4 dargestellte Pulspaket realisiert. Ein Steuersignal mit logischem Wert "1" entspricht in Figur 5 einem eingeschalteten steuerbaren Schaltmittel 13. Ein Steuersignal mit logischem Wert "0" entspricht in Figur 5 einem ausgeschalteten steuerbaren Schaltmittel 13.

Das steuerbare Schaltmittel 13 wird zu einem ersten Einschaltzeitpunkt 41 eingeschaltet. Zu dem ersten Einschaltzeitpunkt 41 ist der Ausgangsstrom an dem ersten Schaltschwellenwert 36 angelangt. Das steuerbare Schaltmittel 13 wird zu einem ersten Ausschaltzeitpunkt 42 ausgeschaltet. Zu dem ersten Ausschaltzeitpunkt 42 ist der Ausgangsstrom an dem zweiten Schaltschwellenwert 37 angelangt. Zu dem zweiten Einschaltzeitpunkt 43 wird das steuerbare Schaltmittel 13 erneut eingeschaltet. Ein zeitlicher Abstand zwischen den steigenden Flanken des Steuersignals bei aufeinanderfolgenden Einschaltzeitpunkten 41, 43 und/oder ein zeitlicher Abstand zwischen den fallenden Flanken des Steuersignals bei aufeinanderfolgenden Ausschaltzeitpunkten entspricht dem Inversen der Schaltfrequenz.

Die Steuereinrichtung 14 kann verschiedene Ausgestaltungen aufweisen, um die unter Bezugnahme auf Figur 3 bis Figur 5 beschriebene Änderung von Stromrippeln und Schaltfrequenzen abhängig von einem Dimmlevel zu realisieren und das entsprechende Steuersignal zum Ansteuern des steuerbaren Schaltmittels 13 zu erzeugen.

Bei einer Ausgestaltung kann die Steuereinrichtung 14 eingerichtet sein, um zu erkennen, wenn der Ausgangsstrom den ersten Schaltschwellenwert 36 erreicht und wenn der Ausgangsstrom den zweiten Schaltschwellenwert 37 erreicht. Entsprechend kann die Steuereinrichtung 14 das steuerbare Schaltmittel bei den Einschaltzeitpunkten 41, 43 einschalten, wenn das Erreichen des ersten Schaltschwellenwerts 36 erkannt wird, und bei dem Ausschaltzeitpunkt 42 ausschalten, wenn das Erreichen des zweiten Schaltschwellenwerts 37 erkannt wird. Der erste Schaltschwellenwert und der zweite Schaltschwellenwert können von der Steuereinrichtung 14 abhängig vom Dimmlevel ermittelt werden.

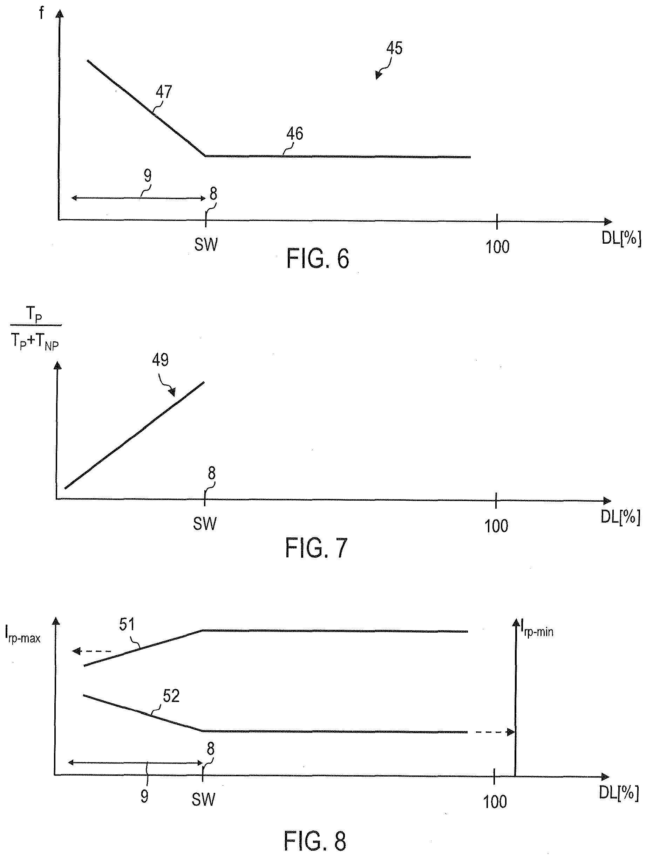

Die Steuereinrichtung kann den ersten Schaltschwellenwert und den zweiten Schaltschwellenwert beispielsweise kennfeldbasiert ermittelt, rechnerisch ermitteln, z.B. durch Auswertung von Funktionen, wie sie schematisch in Figur 8 dargestellt sind, oder eine rechnerische Weiterverarbeitung kennfeldbasierter Größen vornehmen.

Bei einer weiteren Ausgestaltung kann die Steuereinrichtung 14 eingerichtet sein, um zu erkennen, wenn der Ausgangsstrom den ersten Schaltschwellenwert 36 erreicht. Die Steuereinrichtung 14 kann weiterhin eingerichtet sein, um die erste Zeitdauer 38 zu bestimmen, für die das steuerbare Schaltmittel bei dem entsprechenden Dimmlevel eingeschaltet bleiben soll. Entsprechend kann die Steuereinrichtung 14 das steuerbare Schaltmittel bei den Einschaltzeitpunkten 41, 43 einschalten, wenn das Erreichen des ersten Schaltschwellenwerts 36 erkannt wird. Die Steuereinrichtung 14 kann den Ausschaltzeitpunkt 42 abhängig von dem Einschaltzeitpunkt 41 und der ersten Zeitdauer 38 bestimmen und das steuerbare Schaltmittel 13 zum Ausschaltzeitpunkt 42 ausschalten. Der erste Schaltschwellenwert und die erste Zeitdauer können von der Steuereinrichtung 14 abhängig vom Dimmlevel ermittelt werden. Die Steuereinrichtung kann den ersten Schaltschwellenwert und die erste Zeitdauer beispielsweise kennfeldbasiert ermittelt, rechnerisch ermitteln, z.B. durch Auswertung von Funktionen, wie sie schematisch in Figur 6 und Figur 8 dargestellt sind, oder eine rechnerische Weiterverarbeitung kennfeldbasierter Größen vornehmen. Beispielsweise kann die erste Zeitdauer als ein bekannter prozentualer Anteil des Inversen der in Figur 6 dargestellten Schaltfrequenz bestimmt werden. Die erste Zeitdauer kann beispielsweise durch Multiplikation des Inversen der in Figur 6 dargestellten Schaltfrequenz mit einem bekannten Faktor berechnet werden.

Bei einer weiteren Ausgestaltung kann die Steuereinrichtung 14 eingerichtet sein, um zu erkennen, wenn der Ausgangsstrom den zweiten Schaltschwellenwert 37 erreicht. Die Steuereinrichtung 14 kann weiterhin eingerichtet sein, um die zweite Zeitdauer 39 zu bestimmen, für die das steuerbare Schaltmittel bei dem entsprechenden Dimmlevel ausgeschaltet bleiben soll. Entsprechend kann die Steuereinrichtung 14 das steuerbare Schaltmittel bei dem Ausschaltzeitpunkt 42 ausschalten, wenn das Erreichen des zweiten Schaltschwellenwerts 37 erkannt wird. Die Steuereinrichtung 14 kann den Einschaltzeitpunkt 43 abhängig von dem Ausschaltzeitpunkt 42 und der zweiten Zeitdauer 39 bestimmen und das steuerbare Schaltmittel 13 zum Einschaltzeitpunkt 43 einschalten. Der zweite Schaltschwellenwert und die zweite Zeitdauer können von der Steuereinrichtung 14 abhängig vom Dimmlevel ermittelt werden. Die Steuereinrichtung kann den zweiten Schaltschwellenwert und die zweite Zeitdauer beispielsweise kennfeldbasiert ermittelt, rechnerisch ermitteln, z.B. durch Auswertung von Funktionen, wie sie schematisch in Figur 6 und Figur 8 dargestellt sind, oder eine rechnerische Weiterverarbeitung kennfeldbasierter Größen vornehmen. Beispielsweise kann die zweite Zeitdauer als ein bekannter prozentualer Anteil des Inversen der in Figur 6 dargestellten Schaltfrequenz bestimmt werden. Die zweite Zeitdauer kann beispielsweise durch Multiplikation des Inversen der in Figur 6 dargestellten Schaltfrequenz mit einem bekannten Faktor berechnet werden.

Figur 6 zeigt beispielhaft den Verlauf einer Schaltfrequenz 45 des steuerbaren Schaltmittels in Abhängigkeit vom Dimmlevel. Ein Dimmlevelbereich 9 umfasst niedrige Dimmlevel, beispielsweise Dimmlevel, die kleiner als ein Schwellenwert 8 sind, der mit SW bezeichnet wird. Für Dimmlevel im Dimmlevelbereich 9 ist die Schaltfrequenz eine monoton abnehmende Funktion 47 des Dimmlevels.

Für Dimmlevel außerhalb des Dimmlevelbereichs 9, d.h. für Dimmlevel, die größer als der Schwellenwert SW sind, kann die Schaltfrequenz beispielsweise eine konstante Funktion 46 sein. Dadurch können hohe Schaltverluste in dem Betriebsbereich, in dem größere Ströme fließen, vermieden werden. Andere Ausgestaltungen sind möglich, bei denen die Schaltfrequenz auch für größere Dimmlevel von dem Dimmlevel abhängt.

Wie in Figur 6 schematisch dargestellt ist, kann die Schaltfrequenz für Dimmlevel im Dimmlevelbereich 9 eine linear abnehmende Funktion des Dimmlevels sein. Andere funktionale Abhängigkeiten können verwendet werden, bei denen die Schaltfrequenz kleiner wird, wenn der Dimmlevel größer wird.

Während die Schaltfrequenz in Figur 6 schematisch auch für Dimmlevel eingezeichnet ist, die größer als der Schwellenwert SW sind, kann außerhalb des Dimmlevelbereichs 9 auch eine andere Dimmmethode eingesetzt werden. Beispielsweise kann Amplitudendimmen verwendet werden.

Die Schaltfrequenz, mit der das steuerbare Schaltmittel während eines Pulspakets geschaltet wird, darf nicht verwechselt werden mit der Frequenz, mit der aufeinanderfolgende Pulspakete erzeugt werden. Die entsprechenden Größen können insbesondere auch unterschiedliche funktionale Abhängigkeiten vom Dimmlevel aufweisen. Wenn mit T_{P} die Pulsdauer eines Pulspakets, die in Figur 2 als Pulsdauer 27 dargestellt ist, mit T_{NP} die in Figur 2 als Zeitdauer 28 dargestellte Zeitdauer 28 zwischen der fallenden Flanke eines Pulspakets und der steigenden Flanke des darauffolgenden Pulspakets und entsprechend mit T_{P} + T_{NP} die in Figur 2 als Periode 29 dargestellte Zeitdauer bezeichnet wird, ist 1/(T_{P} + T_{NP}) die Frequenz, mit der Pulspakete erzeugt werden. Wie in Figur 7 schematisch dargestellt ist, ist das Produkt 49 aus Pulsdauer T_{P} und der Frequenz, mit der Pulspakete erzeugt werden, eine monoton zunehmende Funktion des Dimmlevels, auch wenn Dimmlevel kleiner als der Schwellenwert SW ist. Dieses Produkt 49 bestimmt die über mehrere Pulspakete gemittelte effektive Stromabgabe und somit die effektive Helligkeit.

Figur 8 veranschaulicht die funktionale Abhängigkeit der maximalen Stromstärke 51 von Stromrippeln und der minimalen Stromstärke 52 von Stromrippeln der Pulspakete.

Für Dimmlevel in dem Dimmlevelbereich 9 ist die maximale Stromstärke 51 von Stromrippeln eine monoton zunehmende Funktion des Dimmlevels. Die maximale Stromstärke 51 der Stromrippel kann eine linear zunehmende Funktion des Dimmlevels sein.

Für Dimmlevel in dem Dimmlevelbereich 9 ist die minimale Stromstärke 52 von Stromrippeln eine monoton abnehmende Funktion des Dimmlevels. Die minimale Stromstärke 52 der Stromrippel kann eine linear abnehmende Funktion des Dimmlevels sein. Eine Steigung der Geraden, die die minimale Stromstärke 52 der Stromrippel als Funktion des Dimmlevels angibt, kann gleich dem Negativen der Steigung der Geraden sein, die die maximale Stromstärke 51 der Stromrippel als Funktion des Dimmlevels angibt.

Andere funktionale Abhängigkeiten der maximalen Stromstärke 51 und/oder der minimalen Stromstärke 52 können verwendet werden.

Die maximale Stromstärke 51 und/oder die minimale Stromstärke 52 der Stromrippel als Funktion des Dimmlevels, wie sie in Figur 8 dargestellt ist, kann zur Definition von Schaltschwellenwerten verwendet werden. Dies wurde unter Bezugnahme auf Figur 3 bis Figur 5 bereits beschrieben.

Eine Abhängigkeit der maximalen Stromstärke 51 und/oder der minimalen Stromstärke 52 vom Dimmlevel, wie sie schematisch in Figur 8 dargestellt ist, hat die Wirkung, dass die mittlere Stromstärke über einen Schaltzyklus auch bei Anpassung der Schaltschwellenwerte, Schaltfrequenz und/oder Amplitude der Stromrippel unverändert bleibt. Dies erleichtert die Steuer- und/oder Regelprozeduren zur Bestimmung der Pulsdauer T_{P} oder der Frequenz 1/(T_{P} + T_{NP}), mit der aufeinanderfolgende Pulspakete erzeugt werden.

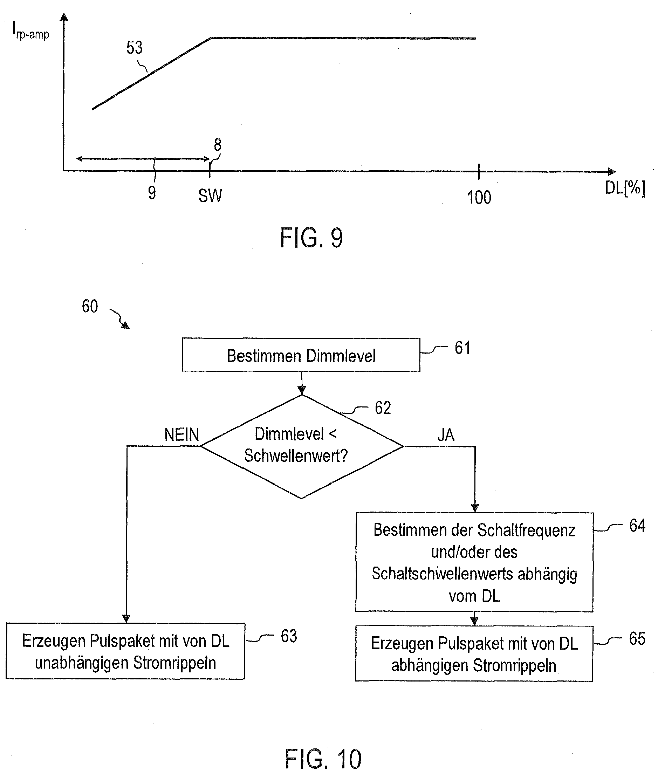

Figur 9 veranschaulicht die funktionale Abhängigkeit einer Amplitude 53 von Stromrippeln der Pulspakete. Für Dimmlevel in dem Dimmlevelbereich 9 ist die maximale Stromstärke 51 von Stromrippeln eine monoton zunehmende Funktion des Dimmlevels. Für Dimmlevel, die größer als der Schwellenwert 8 sind, kann die Amplitude der Stromrippel konstant gehalten werden. Dadurch werden hohe Schaltverluste in dem Betriebsbereich, in dem größere Ströme fließen, vermieden.

Figur 10 ist ein Flussdiagramm eines Verfahrens 60 nach einem Ausführungsbeispiel. Das Verfahren kann von der Betriebsschaltung 1 automatisch ausgeführt werden, wobei die Steuereinrichtung 14 die entsprechenden Verarbeitungsschritte ausführen kann.

Bei Schritt 61 wird ein Dimmlevel bestimmt. Der Dimmlevel kann beispielsweise über eine Schnittstelle der Betriebsschaltung 1 empfangen werden, abhängig von einem Sensorsignal festgelegt werden oder abhängig von einer Betätigung eines Eingabeelements ermittelt werden.

Bei Schritt 62 wird überprüft, ob der Dimmlevel kleiner als ein Schwellenwert ist. Falls der Dimmlevel nicht kleiner als der Schwellenwert ist, können bei Schritt 63 beispielsweise Pulspakete erzeugt werden, wobei die Schaltfrequenz des steuerbaren Schaltmittels und die Amplitude der Stromrippel unabhängig vom Dimmlevel sind. Es können auch andere Dimmtechniken eingesetzt werden.

Falls der Dimmlevel kleiner als der Schwellenwert ist, fährt das Verfahren bei Schritt 64 fort. Dabei kann eine Schaltfrequenz und/oder wenigstens ein Schaltschwellenwert und/oder wenigstens eine Zeitdauer, für die das steuerbare Schaltmittel ein- oder ausgeschaltet werden soll, abhängig vom Dimmlevel ermittelt werden. Die Ermittlung kann wie unter Bezugnahme auf Figur 3 bis Figur 5 beschrieben erfolgen.

Bei Schritt 65 werden Pulspakete mit einer Schaltfrequenz und/oder mit Stromrippeln erzeugt, die von dem Dimmlevel abhängen.

Bei einer Veränderung des Dimmlevels können die Schritte 61-65 wiederholt werden. Wird beispielsweise der Dimmlevel ausgehend von einem Wert, der kleiner als der Schwellenwert SW ist, weiter verringert, kann die Schaltfrequenz für das steuerbare Schaltmittel 13 erhöht und/oder eine Amplitude der Stromrippel verringert werden.

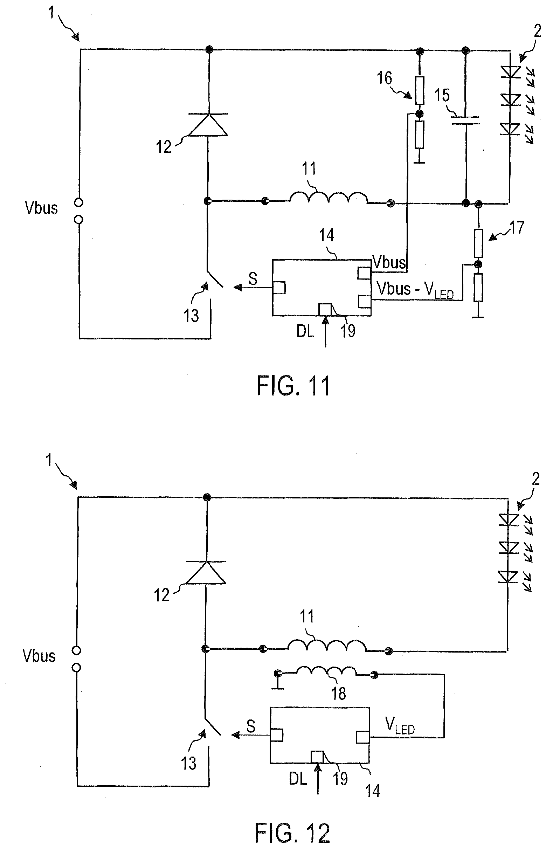

Eine dynamische Anpassung der Stromrippel und/oder der Schaltfrequenz von Pulspaketen in Abhängigkeit von einem Dimmlevel kann durch eine Anpassung von Schaltschwellenwerten erreicht werden. Die Erfassung des Ausgangsstroms kann auf unterschiedliche Weisen erfolgen, wie in Figur 11 und Figur 12 illustriert ist.

Figur 11 und Figur 12 zeigen Ausgestaltungen von Betriebsschaltungen nach Ausführungsbeispielen, bei denen eine vom Ausgangsstrom abhängige Größe erfasst wird. Diese kann mit wenigstens einem Schaltschwellenwert verglichen werden, der von dem Dimmlevel abhängt, wie unter Bezugnahme auf Figur 3 bis Figur 9 erläutert wurde. Bei der der Betriebsschaltung von Figur 11 kann über Ohmsche Spannungsteiler 16, 17 die über die LED(s) abfallende Spannung V_{LED} bestimmt werden. Dabei ergibt sich aus der Differenz der Spannungen an den Spannungsteilern 16, 17 die über die LED(s) abfallende Spannung V_{LED}. In Kenntnis der Kennlinie der LED kann anhand der über der LED(s) abfallenden Spannung V_{LED} auf den durch die LED 2 fließenden Strom geschlossen werden. Abhängig von der so ermittelten Ausgangsspannung der Betriebsschaltung 1 kann ein Vergleich mit entsprechenden Schaltschwellenwerten erfolgen.

Bei der Betriebsschaltung von Figur 12 kann über eine Induktivität 18, die mit der Spule 11 induktiv gekoppelt ist, der durch die Spule fließende Strom oder die über der Spule abfallende Spannung ermittelt werden. Abhängig von dem so ermittelten Spulenstrom oder der Spulenspannung der Betriebsschaltung 1 kann somit auf den Strom durch die LED 2 geschlossen werden und ein Vergleich mit entsprechenden Schaltschwellenwerten erfolgen.

Mittels der Erfassung der über der Spule 11 abfallenden Spannung kann auf die an den LED(s) abfallende Spannung V_{LED} geschlossen werden. Wenn das steuerbare Schaltmittel 13 geöffnet ist und die Spule 11 den Strom durch die LED während der Entmagnetisierungsphase weitertreibt, entspricht den LED(s) abfallende Spannung V_{LED} in etwa der über der Spule 11 abfallenden Spannung, wobei der Unterschied zwischen beiden Spannungen die Durchflussspannung der Diode 12 ist, wobei dieser Betrag entweder in der Erfassung berücksichtigt oder auch in einer einfachen Variante vernachlässigt werden kann. Die Durchflussspannung der Diode 12 kann beispielsweise 0,7 V betragen. In Kenntnis der Kennlinie der LED kann anhand der über der LED(s) abfallenden Spannung V_{LED} auf den durch die LED 2 fließenden Strom geschlossen werden.

Alternativ zur Überwachung der über der LED(s) abfallenden Spannung V_{LED} zur Bestimmung des ersten Schaltschwellenwerts 31, 36 für das Einschalten des steuerbaren Schaltmittels 13 kann auch eine direkte Messung des Stromes durch die LED 2 erfolgen.

Wie in Figur 11 und Figur 12 schematisch dargestellt ist, kann die Steuereinrichtung 14 einen Eingang 19 zum Empfangen eines Signals DL umfassen, das den Dimmlevel angibt.

Die dynamische Anpassung der Stromrippel und/oder der Schaltfrequenz von Pulspaketen in Abhängigkeit von einem Dimmlevel kann dazu verwendet werden, ein wahrnehmbares Flackern selbst dann zu verringern, wenn bei einem gleichbleibenden Dimmlevel unterschiedliche Pulspakete eine unterschiedliche Anzahl von Schaltzyklen des steuerbaren Schalmittels aufweisen. Beispielsweise kann ein Pulspaket eine Anzahl np von Schaltzyklen aufweisen, und das darauffolgende Pulspaket kann eine Anzahl np ± 1 von Schaltzyklen aufweisen. Das nächste Pulspaket kann beispielsweise wieder np Schaltzyklen aufweisen. Ein derartiges "Umschalten" der Schaltzyklenzahl kann beispielsweise vorkommen, wenn der Zeitpunkt, an dem die Ausgangsstromstärke den unteren Schaltschwellenwert erreicht, näherungsweise mit dem Ende der Pulsdauer zusammenfällt. Ein derartiges Umschalten der Schaltzyklenzahl kann auch bewusst und kontrolliert eingeführt werden, um den über mehrere Pulspakete gemittelten Strom genauer einstellen zu können.

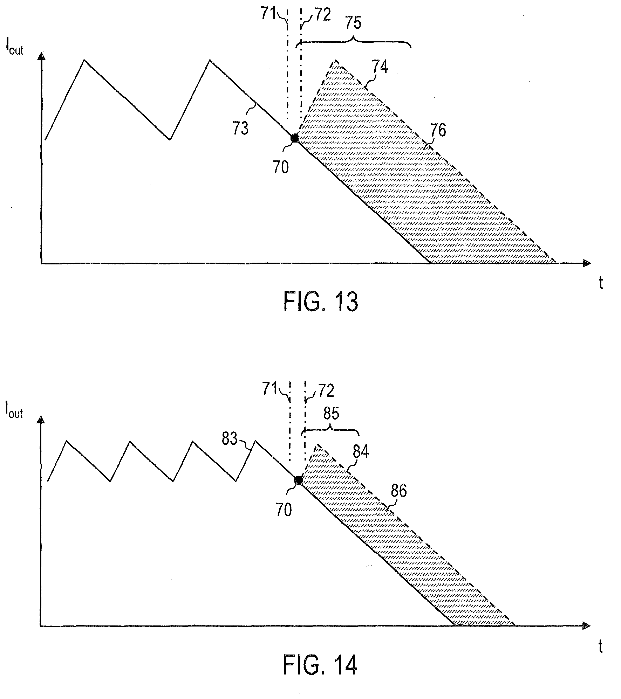

Figur 13 zeigt ein Ende eines Pulspakets. An einem Punkt 70 erreicht die Stromstärke den ersten Schaltschwellenwert. Endet die Pulsdauer des entsprechenden Pulspakets zu einer Zeit 71, kurz bevor die Stromstärke bei 70 den ersten Schaltschwellenwert erreicht, wird das steuerbare Schaltmittel nicht erneut eingeschaltet. Das Stromrippel 73 ist das letzte Stromrippel. Die Stromstärke kann abfallen, um das Pulspaket zu beenden. Endet die Pulsdauer des entsprechenden Pulspakets zu einer Zeit 72, kurz nachdem die Stromstärke bei 70 den ersten Schaltschwellenwert erreicht, wird das steuerbare Schaltmittel erneut eingeschaltet. Es folgt ein weiterer Schaltzyklus 75, der zu einem Stromrippel 74 führt. Erst nach dem Ende des weiteren Schaltzyklus 75 wird das steuerbare Schaltmittel nicht erneut eingeschaltet, um das Pulspaket zu beenden.

Das Zeitintegral über den Strom des Pulspakets definiert jeweils die von der LED bzw. den LEDs ausgegebene Lichtenergie. Das entsprechende Zeitintegral unterscheidet sich für die beiden Fälle mit um eins unterschiedlicher Schaltzyklenzahl np und np+1 um die Fläche 76.

Bei kleineren Dimmleveln ist das Zeitintegral des Ausgangsstroms berechnet über das Pulspaket kleiner als bei größeren Dimmleveln. Die Differenz 76 der Zeitintegrale fällt bei kleinen Dimmleveln im Vergleich zum Integral über das gesamte Pulspaket relativ stärker ins Gewicht als für größere Dimmlevel. Dies kann zu einem unerwünschten, wahrnehmbaren Flackern führen.

Figur 14 illustriert die Wirkung von Vorrichtungen und Verfahren nach Ausführungsbeispielen. Dabei wird die Schaltfrequenz im Vergleich zu Figur 13 bei kleinen Dimmleveln erhöht. Die Amplitude der Spannungsrippel wird verkleinert. Die Skalierung der Koordinatenachsen ist in Figur 13 und Figur 14 gleich gewählt.

Endet die Pulsdauer des entsprechenden Pulspakets zu einer Zeit 71, kurz bevor die Stromstärke bei 70 den ersten Schaltschwellenwert erreicht, wird das steuerbare Schaltmittel nicht erneut eingeschaltet. Das Stromrippel 83 ist das letzte Stromrippel. Die Stromstärke kann abfallen, um das Pulspaket zu beenden. Endet die Pulsdauer des entsprechenden Pulspakets zu einer Zeit 72, kurz nachdem die Stromstärke bei 70 den ersten Schaltschwellenwert erreicht, wird das steuerbare Schaltmittel erneut eingeschaltet. Es folgt ein weiterer Schaltzyklus 85, der zu einem Stromrippel 84 führt. Erst nach dem Ende des weiteren Schaltzyklus 85 wird das steuerbare Schaltmittel nicht erneut eingeschaltet, um das Pulspaket zu beenden. Die Differenz der Zeitintegrale unterscheidet sich für die beiden Fälle mit um eins unterschiedlicher Schaltzyklenzahl np und np+1 um die Fläche 86, die kleiner ist als die entsprechende Fläche 76 in Figur 13. Flackern kann verringert werden.

Die Erhöhung der Schaltfrequenz bei kleinen Dimmleveln führt entsprechend zu einer kürzeren Dauer des Schaltzyklus. Dies erlaubt einer Verringerung von Fehlern bei der Helligkeitssteuerung oder Helligkeitsregelung auch dann, wenn kein Umschalten zwischen unterschiedlicher Schaltzyklenzahl beim gleichen Dimmlevel erfolgt. Beispielsweise wird die maximale Zeitdifferenz zwischen dem Ende eines Schaltzyklus und dem Ende der Pulsdauer verringert.

Bei größeren Dimmleveln sind die über ein Pulspaket berechneten Zeitintegrale des Ausgangsstroms insgesamt größer. Es kann eine kleinere Schaltfrequenz und eine größere Amplitude der Stromrippel verwendet werden, ohne starkes Flackern zu verursachen. Schaltverluste können so durch die dynamische Anpassung der Schaltfrequenz geringer gehalten werden.

Verfahren und Vorrichtungen nach Ausführungsbeispielen können bei Betriebsgeräten für Leuchtmittel, beispielsweise bei einem LED-Konverter, verwendet werden.

## Patentansprüche

1. Betriebsschaltung für wenigstens eine Leuchtdiode (2), umfassend
Ausgangsanschlüsse zum Verbinden mit der wenigstens einen Leuchtdiode (2),
eine Spule (11),
eine Diode (12),
ein steuerbares Schaltmittel (13) und
eine Steuereinrichtung (14) zum getakteten Schalten des steuerbaren Schaltmittels (13),
wobei die Betriebsschaltung dazu eingerichtet ist, durch das getaktete Schalten des steuerbaren Schaltmittels (13) einen Ausgangsstrom in Form von durch einen zeitlichen Abstand (28) voneinander getrennten Pulspaketen (21, 22) bereitzustellen, und
wobei mit Einschalten der steuerbaren Schaltmittel (13) Energie in der Spule (11) zwischengespeichert wird, und mit Ausschalten der steuerbaren Schaltmittel (13) die in der Spule (11) zwischengespeicherte Energie über die Diode (12) und über die wenigstens eine Leuchtdiode (2) entladen wird, und
wobei die Steuereinrichtung (14) dazu eingerichtet ist, während einer Pulsdauer (27) des jeweiligen Pulspakets (21, 22) das steuerbare Schaltmittel (13) mit einer Schaltfrequenz (45) wiederholt einzuschalten und auszuschalten, wobei während der Pulsdauer des jeweiligen Pulspakets (21, 22) in dem Ausgangsstrom Stromrippel erzeugt werden,
**dadurch gekennzeichnet**,
die Steuereinrichtung (14) dazu eingerichtet ist, das steuerbare Schaltmittel (13) so zu schalten, dass die Schaltfrequenz (45) wenigstens in einem Dimmlevelbereich (9) von einem Dimmlevel abhängt, wobei die Schaltfrequenz (45) wenigstens in dem Dimmlevelbereich (9) eine monoton abnehmende Funktion (47) des Dimmlevels ist.

2. Betriebsschaltung nach Anspruch 1,
wobei die monoton abnehmende Funktion wenigstens für Dimmlevel, die kleiner als ein Schwellenwert (8) sind, eine streng monoton abnehmende Funktion (47) des Dimmlevels ist.

3. Betriebsschaltung nach einem der vorhergehenden Ansprüche,
wobei eine Amplitude (40) der in dem jeweiligen Pulspaket (21, 22) auftretenden Stromrippel (73, 74, 83, 84) in dem wenigstens einen Dimmlevelbereich (9) von dem Dimmlevel abhängt.

4. Betriebsschaltung nach einem der vorhergehenden Ansprüche,
wobei eine maximale Stromstärke und eine minimale Stromstärke der Stromrippel in dem wenigstens einen Dimmlevelbereich (9) von dem Dimmlevel abhängen.

5. Betriebsschaltung nach Anspruch 3 oder Anspruch 4,
wobei ein Mittelwert (33) einer Stromstärke während eines Schaltzyklus zum getakteten Schalten des steuerbaren Schaltmittels (13) während des Pulspakets (21, 22) unabhängig von dem Dimmlevel ist.

6. Betriebsschaltung nach einem der vorhergehenden Ansprüche,
wobei die Steuereinrichtung (14) dazu eingerichtet ist, während der Pulsdauer (27) das steuerbare Schaltmittel (13) einzuschalten, wenn eine Stromstärke durch die wenigstens eine Leuchtdiode (2) einen ersten Schaltschwellenwert (31; 36) erreicht, und nach einer ersten Zeitdauer (38) wieder auszuschalten,
wobei der erste Schaltschwellenwert (31; 36) und die erste Zeitdauer (38) von dem Dimmlevel abhängen.

7. Betriebsschaltung nach einem der Ansprüche 1-5,
wobei die Steuereinrichtung (14) dazu eingerichtet ist, während der Pulsdauer (27) das steuerbare Schaltmittel (13) auszuschalten, wenn eine Stromstärke durch die wenigstens eine Leuchtdiode (2) einen zweiten Schaltschwellenwert (32; 37) erreicht, und nach einer zweiten Zeitdauer (39) wieder einzuschalten,
wobei der zweite Schaltschwellenwert (32; 37) und die zweite Zeitdauer (39) von dem Dimmlevel abhängen.

8. Betriebsschaltung nach einem der vorhergehenden Ansprüche,
wobei die Steuereinrichtung (14) derart eingerichtet ist, dass in zeitsequentiell erzeugten Pulspaketen (21, 22) der durch einen zeitlichen Abstand (28) voneinander getrennten Pulspaketen (21, 22) die Steuereinrichtung (14) das steuerbare Schaltmittel (13) mit wenigstens zwei unterschiedlichen Schaltzyklenzahlen schaltet.

9. Betriebsschaltung nach Anspruch 8,
wobei die Steuereinrichtung (14) derart eingerichtet ist, dass sich eine Schaltzyklenzahl des Pulspakets (21, 22) und eine weitere Schaltzyklenzahl eines weiteren Pulspakets (21, 22), das für denselben Dimmlevel erzeugt wird, um 1 unterscheiden.

10. Verfahren zum Betreiben wenigstens einer Leuchtdiode (2) abhängig von einem Dimmlevel mittels einer Betriebsschaltung, die Ausgangsanschlüsse zum Verbinden mit der wenigstens einen Leuchtdiode (2), eine Spule (11), eine Diode (12) und ein steuerbares Schaltmittel (13) umfasst,
wobei das steuerbare Schaltmittel (13) zur Bereitstellung eines Ausgangsstroms in Form von durch einen zeitlichen Abstand (28) voneinander getrennten Pulspaketen (21, 22) getaktet geschaltet wird, und
wobei mit Einschalten der steuerbaren Schaltmittel (13) Energie in der Spule (11) zwischengespeichert wird und mit Ausschalten der steuerbaren Schaltmittel (13) die in der Spule (11) zwischengespeicherte Energie über die Diode (12) und über die wenigstens eine Leuchtdiode (2) entladen wird,
wobei das steuerbare Schaltmittel (13) während einer Pulsdauer (27) des jeweiligen Pulspakets (21, 22) mit einer Schaltfrequenz (45) jeweils wiederholt eingeschaltet und ausgeschaltet wird, wobei während der Dauer des jeweiligen Pulspakets (21, 22) Stromrippel erzeugt werden,
**dadurch gekennzeichnet**,
das steuerbare Schaltmittel (13) so eingeschaltet und ausgeschaltet wird, dass die Schaltfrequenz (45) wenigstens in einem Dimmlevelbereich (9) von einem Dimmlevel abhängt, wobei die Schaltfrequenz (45) wenigstens in dem Dimmlevelbereich (9) eine monoton abnehmende Funktion (47) des Dimmlevels ist.

11. Verfahren nach Anspruch 10,
wobei die monotone Funktion wenigstens für Dimmlevel, die kleiner als ein Schwellenwert (8) sind, eine streng monoton abnehmende Funktion (47) des Dimmlevels ist.

12. Verfahren nach Anspruch 10 oder Anspruch 11,
wobei eine Amplitude (40) der in dem jeweiligen Pulspaket (21, 22) auftretenden Stromrippel in dem wenigstens einen Dimmlevelbereich (9) von dem Dimmlevel abhängt.

13. Verfahren nach einem der Ansprüche 10 bis 12,
wobei eine maximale Stromstärke und eine minimale Stromstärke der Stromrippel in dem wenigstens einen Dimmlevelbereich (9) von dem Dimmlevel abhängen.

14. Verfahren nach Anspruch 12 oder Anspruch 13,
wobei ein Mittelwert (33) einer Stromstärke während eines Schaltzyklus zum getakteten Schalten des steuerbaren Schaltmittels (13) während dem jeweiligen Pulspaket (21, 22) unabhängig von dem Dimmlevel ist.

## Claims

1. Operating circuit for at least one light-emitting diode (2), comprising
output terminals for connecting to the at least one light-emitting diode (2),
a coil (11),
a diode (12),
a controllable switching means (13) and
a control device (14) for switching the controllable switching means (13) in a clocked manner,
the operating circuit being configured to provide, by means of the clocked switching of the controllable switching means (13), an output current in the form of pulse packets (21, 22) separated from one another by a time interval (28), and
when the controllable switching means (13) is switched on, energy being temporarily stored in the coil (11), and the energy temporarily stored in the coil (11) being discharged via the diode (12) and via the at least one light-emitting diode (2) when the controllable switching means (13) is switched off, and
the control device (14) being configured to repeatedly switch the controllable switching means (13) on and off at a switching frequency (45) during a pulse duration (27) of each pulse packet (21, 22), current ripples being generated in the output current during the pulse duration of each pulse packet (21, 22),
**characterized in that**
the control device (14) is configured to switch the controllable switching means (13) in such a way that the switching frequency (45) depending on a dimming level, at least in a dimming level range (9), the switching frequency (45) being a monotonically decreasing function (47) of the dimming level, at least in the dimming level range (9).

2. Operating circuit according to claim 1,
wherein the monotonically decreasing function, at least for dimming levels that are below a threshold value (8), is a strictly monotonically decreasing function (47) of the dimming level.

3. Operating circuit according to any of the preceding claims,
wherein an amplitude (40) of the current ripples (73, 74, 83, 84) occurring in each pulse packet (21, 22) is dependent on the dimming level in the at least one dimming level range (9).

4. Operating circuit according to any of the preceding claims,
wherein a maximum current strength and a minimum current strength of the current ripples in the at least one dimming level range (9) depend on the dimming level.

5. Operating circuit according to claim 3 or claim 4,
wherein an average value (33) of a current strength during a switching cycle for the clocked switching of the controllable switching means (13) during the pulse packet (21, 22) is independent of the dimming level.

6. Operating circuit according to any of the preceding claims,
wherein the control device (14) is configured to switch on the controllable switching means (13) during the pulse duration (27) when a current intensity through the at least one light-emitting diode (2) reaches a first switching threshold value (31; 36), and to switch said means off again after a first time period (38),
wherein the first switching threshold (31; 36) and the first time duration (38) depend on the dimming level.

7. Operating circuit according to any of claims 1-5,
wherein the control device (14) is configured to switch off the controllable switching means (13) during the pulse duration (27) when a current strength through the at least one light-emitting diode (2) reaches a second switching threshold value (32; 37), and to switch said means on again after a second time period (39),
wherein the second switching threshold (32; 37) and the second time duration (39) depend on the dimming level.

8. Operating circuit according to any of the preceding claims,
wherein the control device (14) is configured such that, in temporally sequentially generated pulse packets (21, 22) of the pulse packets (21, 22) separated from one another by a time interval (28), the control device (14) switches the controllable switching means (13) with at least two different switching cycle numbers.

9. Operating circuit according to claim 8,
wherein the control device (14) is configured such that a switching cycle number of the pulse packet (21, 22) and a further switching cycle number of a further pulse packet (21, 22) which is generated for the same dimming level differ by 1.

10. Method for operating at least one light-emitting diode (2) depending on a dimming level by means of an operating circuit comprising output terminals for connecting to the at least one light-emitting diode (2), a coil (11), a diode (12) and a controllable switching means (13),
the controllable switching means (13) being switched in a clocked manner to provide an output current in the form of pulse packets (21, 22) separated from one another by a time interval (28), and
when the controllable switching means (13) is switched on, energy being temporarily stored in the coil (11), and the energy temporarily stored in the coil (11) being discharged via the diode (12) and via the at least one light-emitting diode (2) when the controllable switching means (13) is switched off, and
during a pulse duration (27) of each pulse packet (21, 22), the controllable switching means (13) is repeatedly switched on and off at a switching frequency (45), current ripples being generated during the duration of each pulse packet (21, 22),
**characterized in that**
the controllable switching means (13) is switched on and off in such a way that the switching frequency (45) depends on a dimming level, at least in a dimming level range (9), the switching frequency (45) being a monotonically decreasing function (47) of the dimming level, at least in the dimming level range (9).

11. Method according to claim 10,
wherein the monotonic function, at least for dimming levels that are below a threshold value (8), is a strictly monotonically decreasing function (47) of the dimming level.

12. Method according to claim 10 or claim 11,
wherein an amplitude (40) of the current ripples occurring in each pulse packet (21, 22) is dependent on the dimming level in the at least one dimming level range (9).

13. Method according to any of claims 10 to 12,
wherein a maximum current strength and a minimum current strength of the current ripples in the at least one dimming level range (9) depend on the dimming level.

14. Method according to claim 12 or claim 13,
wherein an average value (33) of a current strength during a switching cycle for the clocked switching of the controllable switching means (13) during the pulse packet (21, 22) is independent of the dimming level.

## Revendications

1. Circuit de fonctionnement pour au moins une diode électroluminescente (2), comprenant
des bornes de sortie destinées à être connectées à l'au moins une diode électroluminescente (2),
une bobine (11),
une diode (12),
un moyen de commutation pouvant être commandé (13), et
un dispositif de commande (14) pour la commutation synchronisée du moyen de commutation pouvant être commandé (13),
le circuit de fonctionnement étant configuré pour fournir, à l'aide de la commutation synchronisée du moyen de commutation pouvant être commandé (13), un courant de sortie sous forme de paquets d'impulsions (21, 22) séparés les uns des autres par un intervalle de temps (28),
l'activation du moyen de commutation pouvant être commandé (13) entraînant un stockage temporaire d'énergie dans la bobine (11), et la désactivation du moyen de commutation pouvant être commandé (13) entraînant la décharge, par l'intermédiaire de la diode (12) et par l'intermédiaire de l'au moins une diode électroluminescente (2), de l'énergie stockée temporairement dans la bobine (11), et
le dispositif de commande (14) étant configuré pour activer et pour désactiver de manière répétée le moyen de commutation pouvant être commandé (13) au moyen d'une fréquence de commutation (45) pendant une durée d'impulsion (27) du paquet d'impulsions (21, 22) respectif, des ondulations résiduelles de courant étant générées dans le courant de sortie pendant la durée d'impulsion du paquet d'impulsions (21, 22) respectif,
**caractérisé en ce que**
le dispositif de commande (14) est configuré pour commuter le moyen de commutation pouvant être commandé (13) de sorte que la fréquence de commutation (45), au moins dans une plage de niveaux de gradation (9), dépend d'un niveau de gradation, la fréquence de commutation (45) étant, au moins dans la plage de niveaux de gradation (9), une fonction monotone décroissante (47) du niveau de gradation.

2. Circuit de fonctionnement selon la revendication 1,
dans lequel la fonction monotone décroissante est, au moins pour des niveaux de gradation inférieurs à une valeur seuil (8), une fonction monotone fortement décroissante (47) du niveau de gradation.

3. Circuit de fonctionnement selon l'une des revendications précédentes,
dans lequel une amplitude (40) des ondulations résiduelles de courant (73, 74, 83, 84) apparaissant dans le paquet d'impulsions (21, 22) respectif dans l'au moins une plage de niveaux de gradation (9) dépend du niveau de gradation.

4. Circuit de fonctionnement selon l'une des revendications précédentes,
dans lequel une intensité de courant maximale et une intensité de courant minimale des ondulations résiduelles de courant dans l'au moins une plage de niveaux de gradation (9) dépendent du niveau de gradation.

5. Circuit de fonctionnement selon la revendication 3 ou la revendication 4,
dans lequel une valeur moyenne (33) d'une intensité de courant est indépendante du niveau de gradation pendant un cycle de commutation pour la commutation synchronisée du moyen de commutation pouvant être commandé (13) dans le paquet d'impulsions (21, 22).

6. Circuit de fonctionnement selon l'une des revendications précédentes,
dans lequel le dispositif de commande (14) est configuré pour activer le moyen de commutation pouvant être commandé (13) pendant la durée d'impulsion (27) lorsqu'une intensité de courant atteint une première valeur seuil de commutation (31 ; 36) à l'aide de l'au moins une diode électroluminescente (2), et pour le désactiver après une première période de temps (38),
la première valeur seuil de commutation (31 ; 36) et la première période de temps (38) dépendant du niveau de gradation.

7. Circuit de fonctionnement selon l'une des revendications 1 à 5,
dans lequel le dispositif de commande (14) est configuré pour désactiver le moyen de commutation pouvant être commandé (13) pendant la durée d'impulsion (27) lorsqu'une intensité de courant atteint une seconde valeur seuil de commutation (32 ; 37) à l'aide de l'au moins une diode électroluminescente (2), et pour l'activer après une seconde période de temps (39),
la seconde valeur seuil de commutation (32 ; 37) et la seconde période de temps (39) dépendant du niveau de gradation.

8. Circuit de fonctionnement selon l'une des revendications précédentes,
dans lequel le dispositif de commande (14) est configuré de telle manière que, dans des paquets d'impulsions (21, 22) générés de façon séquentielle dans le temps des paquets d'impulsions (21, 22) séparés les uns des autres par un intervalle de temps (28), le dispositif de commande (14) commute le moyen de commutation pouvant être commandé (13) au moyen d'au moins deux nombres de cycles de commutation différents.

9. Circuit de fonctionnement selon la revendication 8,
dans lequel le dispositif de commande (14) est configuré de telle manière qu'un nombre de cycles de commutation du paquet d'impulsions (21, 22) et un autre nombre de cycles de commutation d'un autre paquet d'impulsions (21, 22) généré pour le même niveau de gradation diffèrent de 1.

10. Procédé permettant de faire fonctionner au moins une diode électroluminescente (2) en fonction d'un niveau de gradation au moyen d'un circuit de fonctionnement qui comprend des bornes de sortie destinées à être connectées à l'au moins une diode électroluminescente (2), une bobine (11), une diode (12) et un moyen de commutation pouvant être commandé (13),
le moyen de commutation pouvant être commandé (13) étant commuté de manière synchronisée pour fournir un courant de sortie sous forme de paquets d'impulsions (21, 22) séparés les uns des autres par un intervalle de temps (28), et
l'activation du moyen de commutation pouvant être commandé (13) entraînant un stockage temporaire d'énergie dans la bobine (11), et la désactivation du moyen de commutation pouvant être commandé (13) entraînant la décharge, par l'intermédiaire de la diode (12) et par l'intermédiaire de l'au moins une diode électroluminescente (2), de l'énergie stockée temporairement dans la bobine (11),
le moyen de commutation pouvant être commandé (13) étant activé et désactivé respectivement de manière répétée au moyen d'une fréquence de commutation (45) pendant une durée d'impulsion (27) du paquet d'impulsions (21, 22) respectif, des ondulations résiduelles de courant étant générées pendant la durée du paquet d'impulsions (21, 22) respectif,
**caractérisé en ce que**
le moyen de commutation pouvant être commandé (13) est activé et désactivé de telle manière que la fréquence de commutation (45), au moins dans une plage de niveaux de gradation (9), dépend d'un niveau de gradation, la fréquence de commutation (45) étant, au moins dans la plage de niveaux de gradation (9), une fonction monotone décroissante (47) du niveau de gradation.

11. Procédé selon la revendication 10,
dans lequel la fonction monotone est, au moins pour des niveaux de gradation inférieurs à une valeur seuil (8), une fonction monotone fortement décroissante (47) du niveau de gradation.

12. Procédé selon la revendication 10 ou la revendication 11,
dans lequel une amplitude (40) des ondulations résiduelles de courant apparaissant dans le paquet d'impulsions (21, 22) respectif dans l'au moins une plage de niveaux de gradation (9) dépend du niveau de gradation.

13. Procédé selon l'une des revendications 10 à 12,
dans lequel une intensité de courant maximale et une intensité de courant minimale des ondulations résiduelles de courant dans l'au moins une plage de niveaux de gradation (9) dépendent du niveau de gradation.

14. Procédé selon la revendication 12 ou la revendication 13,
dans lequel une valeur moyenne (33) d'une intensité de courant est indépendante du niveau de gradation pendant un cycle de commutation pour la commutation synchronisée du moyen de commutation pouvant être commandé (13) dans le paquet d'impulsions (21, 22) respectif.
